# EUROPEAN PATENT APPLICATION

(11) **EP 1 396 834 A2**
(43) Date of publication of application: **10.03.2004**
(21) Application number: 03019966.5
(22) Date of filing: 03.09.2003
(51) Int. Cl.: G09B 21/00

(54) **Braille graphics cell module and braille graphics tactile apparatus**

(30) Priority: 05.09.2002 JP 2002260206
(71) Applicant: KGS Corporation, Hiki-gun, Saitama-ken (JP)
(72) Inventor: Hong, Ri Su, Hiki-gun, Saitama-ken (JP); Iwazaki, Yasuhiro, Hiki-gun, Saitama-ken (JP); Shiraishi, Yukio, Hiki-gun, Saitama-ken (JP); Tsugawa, Masahiro, Hiki-gun, Saitama-ken (JP)
(74) Representative: Luderschmidt, Schüler & Partner GbR

(57) **Abstract**

A braille graphics cell module includes a unit substrate (11), a braille graphics display section (12) which is extended along an upper edge of the unit substrate and holds a plurality of tactile pins movably in a vertical direction, the plurality of tactile pins displaying braille graphics, a plurality of piezoelectric element pieces (15) each having a fixed end and a free end and arranged on a surface of the unit substrate in association with the plurality of tactile pins, the plurality of piezoelectric element pieces moving the corresponding tactile pins in the vertical direction at the free end by bending action, and wiring means (18) arranged at a lower end of the unit substrate so that an upper edge of the wiring means is located close to a node portion of each piezoelectric element piece for a bending operation and a lower edge of the wiring means is located close to the fixed end of the piezoelectric element piece, and having an electric circuit in which the fixed ends of the plurality of piezoelectric element pieces are electrically connected to the wiring means.

## Description

The present invention relates to a braille graphics cell module used to display graphical information such as graphics to visually impaired people as well as a braille graphics tactile apparatus using it.

Braille graphics cells have hitherto been used as means for communicating information to visually impaired people; text information on a computer is converted into braille on the basis of the vertical movement of small pins, and a user traces the braille, formed by these pins, with his or her fingertip to read the text information.

On the other hand, it has been desirable to communicate not only text information but also graphics, which are difficult to communicate using language, to visually impaired people. To meet such requirements, a braille graphics tactile apparatus has been proposed as means for promptly communicating graphical information, which is handled by a computer, to a visually impaired person. This braille graphics tactile apparatus displays graphical information, handled by a computer, on a display screen on the basis of dots without changing the two-dimensional expression of the graphical information. The graphical information is thus communicated to the user by allowing the user to trace this dot display with his or her fingertip to read it.

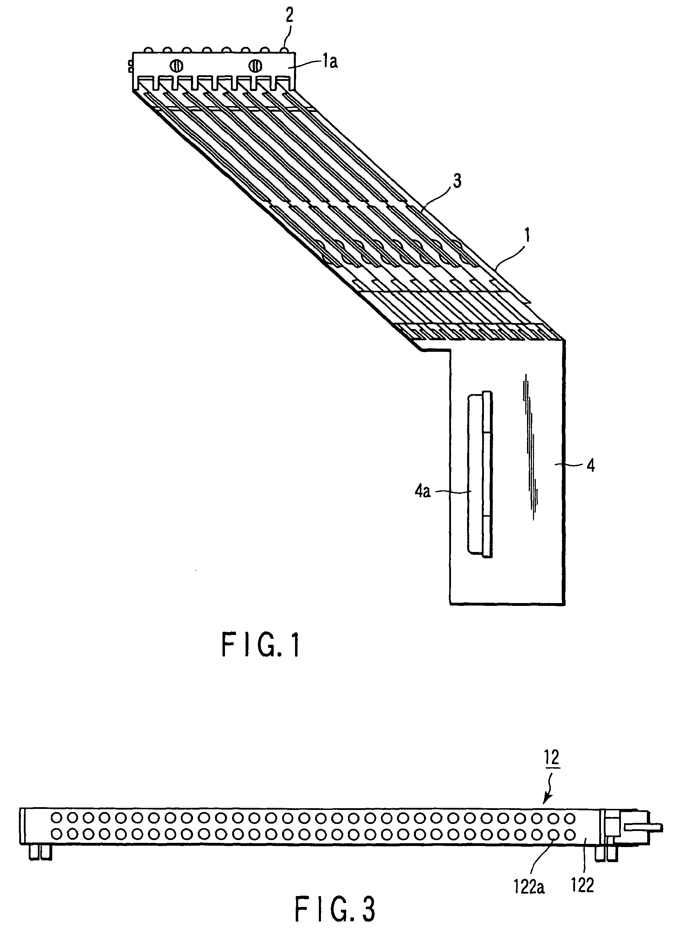

Such a braille graphics tactile apparatus requires the number of dots constituting the display screen to be freely increased or reduced as required for applications. As an apparatus that meets such a requirement, a braille graphics tactile cell has been proposed which is disclosed in, for example, Japanese Patent No. 2847069. The braille graphics tactile cell disclosed in this publication comprises a tactile portion 1a provided at the top of a unit substrate 1 as shown in FIG. 1 and serving as a braille graphics display section. The tactile portion 1a holds two lateral rows each of 16 tactile pins 2. Further, 16 piezoelectric element pieces 3 corresponding to the tactile pins 2 are arranged on each of the front and back surfaces of the unit substrate 1 so as to extend obliquely at a predetermined angle. Each of the tactile pins 2 contacts against a free end of the corresponding piezoelectric element piece 3. Thus, the piezoelectric element piece 3 is bent to move the corresponding tactile pin 2 in a vertical direction. Further, an arithmetic driving section 4 composed of a printed circuit board is provided at a proximal end of the unit substrate 1. The arithmetic driving section 4 is connected to the piezoelectric elements via leads. The arithmetic driving section 4 incorporates an electric circuit used to drive desired ones of the piezoelectric element pieces 3 in accordance with a signal externally inputted via a connector 4a. Such arrangements are used as units and assembled by being connected together in the vertical and horizontal directions, to constitute a display screen of a desired size.

It has recently been desirable to further reduce the size and weight of such a braille graphics tactile apparatus in order to facilitate its handling during practical use.

However, according to the conventional configuration, the arithmetic driving section 4 with the connector 4a is projected from the proximal end of the unit substrate 1. Further, the piezoelectric element pieces 3 are obliquely arranged on the unit substrate 1 at the predetermined angle. Thus, when a large number of such units are connected together in the vertical and horizontal directions, the arithmetic driving section 4 entirely projects downward. This increases the height of the cell. Further, the obliquely arranged piezoelectric element pieces 3 increase the longitudinal dimension of the cell. As a result, the apparatus as a whole inevitably has increased external dimensions.

Jpn. Pat. Appln. KOKAI Publication No. 6-301335 discloses an apparatus as a cell which avoids arranging the piezoelectric element pieces obliquely and which allows the piezoelectric element pieces to be bent so as to move the tactile pins in the vertical direction. In this apparatus, pushup cams each having a first lever and a second lever are each interposed between the free end of a corresponding piezoelectric element piece extended in a perpendicular direction and a corresponding tactile pin. The first lever is extended downward from a pivot center so as to contact against the free end of the corresponding piezoelectric element piece. The lower end of each tactile pin contacts against the corresponding second lever. Then, the piezoelectric element piece is bent to pivot the corresponding pushup cam via its first lever to push up the corresponding tactile pin upward.

In this configuration, the second levers of the respective pushup cams are arranged to cross one another so as to efficiently utilize the space between the tactile pins and the piezoelectric element pieces. However, owing to the use of the pushup cams each having the first lever, extended downward from the pivot center, and the second lever, extended in the lateral direction, a large space is required to pivot the pushup cams. Accordingly, the piezoelectric element pieces must be separated from the tactile pins. As a result, it is difficult to reduce the distance between the tactile pins.

Thus, if a large number of such cells are arranged to form a display screen that displays graphical information, the size of the display screen and thus the braille graphics tactile apparatus must be increased in order to provide a number of dots required to display graphical information sufficient to be properly understood by users.

The present invention is provided in view of the above circumstances. It is an object of the present invention to provide a braille graphics cell module and a braille graphics tactile apparatus the sizes of which can be sharply reduced.

A braille graphics cell module according to the first aspect of the present invention is characterized by comprising: a unit substrate; a braille graphics display section which is extended along an upper edge of the unit substrate and holds a plurality of tactile pins movably in a vertical direction, the plurality of tactile pins displaying braille graphics; wiring part arranged at a lower end of the unit substrate so that an upper edge of the wiring part is located close to a node portion of each piezoelectric element piece for a bending operation and a lower edge of the wiring part is located close to the fixed end of the piezoelectric element piece, and having an electric circuit in which the fixed ends of the plurality of piezoelectric element pieces are electrically connected to the wiring part.

A braille graphics cell module according to the second of the present invention is characterized by comprising: a unit substrate; a braille graphics display section which is extended along an upper edge of the unit substrate and holds a plurality of tactile pins movably in a vertical direction, the plurality of tactile pins displaying braille graphics; a plurality of piezoelectric element pieces each having a fixed end and a free end and arranged on a surface of the unit substrate in association with the plurality of tactile pins, the plurality of piezoelectric element pieces being bent; and pushup cams each provided pivotably between the corresponding piezoelectric element piece and tactile pin and each having a first action piece which contacts against the free end of the piezoelectric element and a second action piece having a placement surface on which a lower end of the tactile pin is placed, the pushup cams each being formed to have an obtuse angle between the first action piece and the second action piece, the pushup cams each being pivoted when the first action piece is pushed by the free end of the bent piezoelectric element piece, to push up the tactile pin placed on the second action piece.

Braille graphics cell modules according to the above aspects may be combined to constitute a braille graphics apparatus.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view schematically showing a configuration of an example of a conventional braille graphics tactile cell;
FIG. 2 is a view schematically showing a configuration of a braille graphics cell module to which an embodiment of the present invention is applied;
FIG. 3 is a view schematically showing a configuration of a braille graphics display section of the braille graphics cell module according to the embodiment of the present invention;
FIG. 4 is a view showing essential parts of the braille graphics cell module according to the embodiment of the present invention;
FIGS. 5A and 5B are views illustrating a piezoelectric element piece used in the braille graphics cell module according to the embodiment of the present invention; and
FIG. 6 is a view schematically showing a configuration of a braille graphics tactile apparatus composed of braille graphics cell modules according to the embodiment of the present invention.

An embodiment of the present invention will be described below with reference to the drawings.

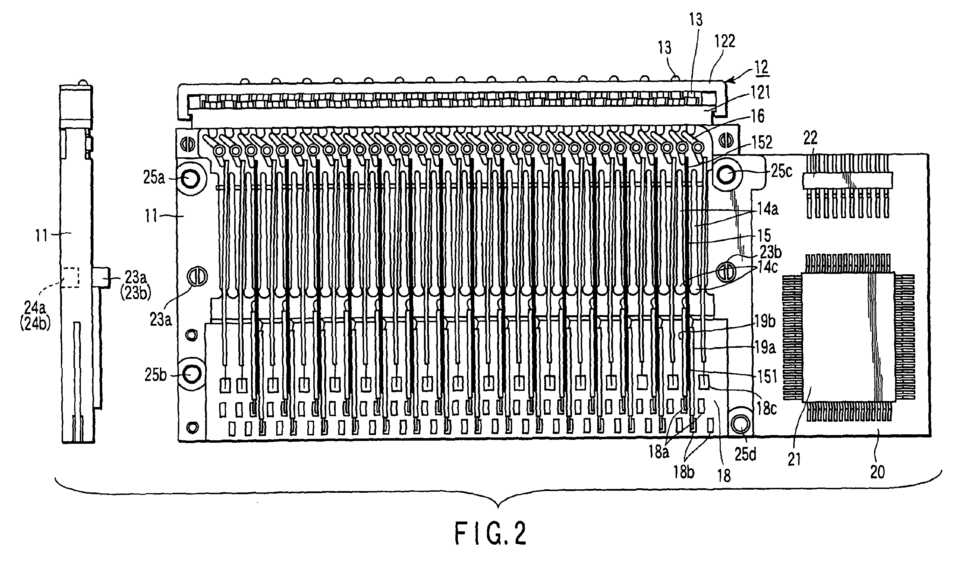

FIG. 2 schematically shows a configuration of a braille graphics cell module to which the present invention is applied (a front view and a side view).

FIG. 2 shows an example of a braille graphics cell module provided with 64 braille graphics cells, i.e. 32 braille graphics cells on each side of the cell module. Further, FIG. 2 shows every other piezoelectric element piece for easy-to-see illustration.

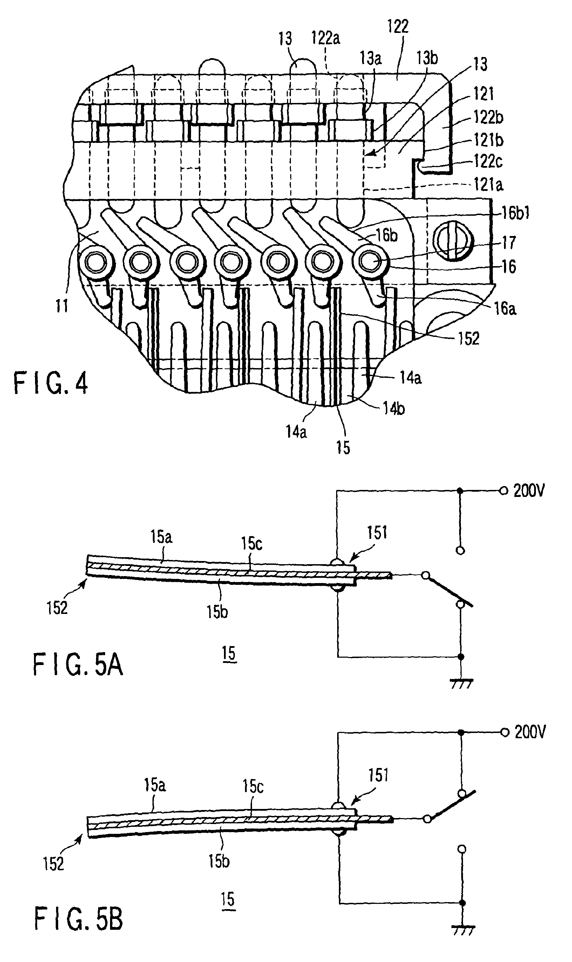

In FIG. 2, a unit substrate 11 is formed of a synthetic resin or the like and shaped like a plate using a molding process. A braille graphics display section 12 is provided along the upper edge of the unit substrate 11 as shown in FIG. 3.

The braille graphics display section 12 has a block 121 integrated with the unit substrate 11 along its top and a top plate 122 arranged above the block 121 with a predetermined spacing between the top plate 122 and the block 121 (for the details, see FIG. 4).

The block 121 is formed with 64 hole portions 121a, i.e. two lateral rows each of 32 hole portions 121a. The hole portions 121a in each row are arranged along the opposite surfaces of the unit substrate 11. Further, as shown in FIG. 4, a projecting portion 121b is provided at each end of the block 121. On the other hand, the top plate 122 is formed with 64 hole portions 122a, i.e. two lateral rows each of 32 hole portions 122a in association with the hole portions 121a in the block 121. Further, a bent portion 122b is formed at each end of the top plate 122. A key portion 122c is formed at the tip of the bent portion 122b. By locking the key portion 122c on the projecting portion 121b at each end of the block 121, the top plate 122 is mounted on the block 121.

Tactile pins 13 are held between the block 121 and the top plate 122 in association with the respective hole portions 121a. As shown in FIG. 4, each of the tactile pins 13 is formed with a flange portion 13b at a position slightly above an intermediate portion of a pin main body 13a. A part of the tactile pin 13 which is located below the flange portion 13b penetrates the corresponding hole portion 121a in the block 121. A part of the tactile pin 13 which is located above the flange portion 13b penetrates the corresponding hole portion 122a in the top plate 122. In this case, the tactile pin 13 has its flange portion 13b always contacted against the block 121 owing to its weight. In this state, the pin main body 13 is held so that its upper end is flush with the surface of the top plate 122 and that its lower end projects downward from the hole portion 121a by a predetermined distance. Further, when a pushup force acts on the lower end of the pin main body 13a (this will be described later in detail), the flange portion 13b is moved until it contacts against the bottom surface of the top plate 122. Then, the upper end of the pin main body 13a projects from the top plate 122 by a predetermined dimension.

A large number of partitioning walls 14a are arranged in juxtaposition along the width direction of the unit substrate 11. The adjacent partitioning walls 14b constitute a piezoelectric element piece holding section 14b (see FIG. 4). The piezoelectric element piece holding sections 14b correspond to the respective tactile pins 13 and are formed at 64 positions, i.e. 32 positions on each surface of the unit substrate 11.

The partitioning walls 14a are formed to have a predetermined length along the height direction of the unit substrate 11. A circular piezoelectric element piece support point section 14c is formed at the proximal end (fixed end) of each partitioning wall 14a. The partitioning wall 14 is tapered toward its leading end. In this case, the spacing between the adjacent piezoelectric element piece support point sections 14c is small enough to sandwich a node portion (support point) of the piezoelectric element piece 15 for a bending operation, described later.

The piezoelectric element piece holding section 14b holds the piezoelectric element piece 15. As shown in FIGS. 5A and 5B, the piezoelectric element piece 15 is of a bimorph type in which a thin piece 15c of an elastic conductive material such as a nickel alloy is interposed between piezoelectric layers 15a and 15b composed of a piezoelectric material, for example, PZT. Further, with 200 V applied to one 15a of the piezoelectric layers of a proximal end 151 and with the other piezoelectric layer 15b and the thin piece 15c grounded as shown in FIG. 5A, the piezoelectric element piece 15 is bent when 200 V is applied to the piezoelectric layer 15a and the thin piece 15c as shown in FIG. 5B.

The piezoelectric element piece 15 is arranged so that its node portion (support portion) for a being operation is sandwiched between the piezoelectric element piece support point sections 14c of the piezoelectric element piece holding sections 14b. In this case, a free end 152 of each piezoelectric element piece 15 is located in the space formed between the tapered leading ends of the partitioning walls 14a.

A pushup cam 16 is provided between the free end 152 of each piezoelectric element piece 15 and the corresponding tactile pin 13. Each pushup cam 16 has its central portion supported by a pivot shaft 17 so as to be pivotable, as shown in FIG. 4. The pushup cam 16 is provided with a first action piece 16a that contacts against the free end 152 of the corresponding piezoelectric element piece 15 and a second action piece 16b having a placement surface 16b1 on which the lower end of the corresponding tactile pin 13 is placed. In this case, the pushup cam 16 is formed to have a large angle (obtuse angle) between the first action piece 16a and the placement surface 16b1 of the second action piece 16b. Thus, when the free end 152 of the bent piezoelectric element piece 15 pushes the first action piece 16a from the lateral direction, the pushup cam 16 is pivoted around the pivot shaft 17. Then, the tactile pin 13 placed on the second action piece 16b is pushed up until the flange portion 13b of the pin main body 13a contacts against the bottom surface of the top plate 122.

Specifically, the angle between the first action piece 16a of the pushup cam 16 and the placement surface 16b1 of the second action piece 16b, on which the lower end of the tactile pin 13 is placed, is about 140° . While the first action piece 16a is not pushed by the free end 152 of the piezoelectric element piece 15, the angle between the placement surface 16b1 of the second action piece 16b and the horizontal direction is about 30° . After the free end 152 of the piezoelectric element piece 15 has pushed the first action piece 16a to push up the corresponding tactile pin 13 until its flange portion 13b contacts against the bottom surface of the top plate 122, the angle between the placement surface 16b1 of the second action piece 16b and the horizontal direction is about 45° .

That is, the pushup cam 16 is formed to have such a large angle (obtuse angle) between the first action piece 16a and the second action piece 16b that the pushup cam 16 can be slightly bent. Thus, the tactile pin 13 is pushed up as a result of a small pivot angle associated with a bending operation of the corresponding piezoelectric element piece 15. This enables a reduction in the space required to pivot each pushup cam 16. Therefore, the spacing between the piezoelectric element pieces 15 and the tactile pins 13 can be reduced. This makes it possible to set a much smaller distance between the tactile pins 13.

For example, with the conventional pushup cam, the distance between the tactile pins is about 3 mm at minimum. However, with the present embodiment, the distance can be reduced down to about 2.4 mm.

A printed circuit board 18 as wiring part is provided at the lower end of the unit substrate 11.

The printed circuit board 18 is located so that its upper edge is close to the node portion of each piezoelectric element piece 15 for a bending operation, i.e. close to the piezoelectric element piece support point section 14c of the corresponding partitioning wall 14a. Furthermore, the printed circuit board 18 is located so that its lower edge if close to the proximal end 151 of the corresponding piezoelectric element piece 15.

Terminals 18a, 18b, and 18c are formed on a surface of the printed circuit board 18 in association with the piezoelectric layers 15a and 15b and thin piece 15c, respectively, at the proximal end 151 of each piezoelectric element piece 15. Leads 19a and 19b are used to connect the piezoelectric layers 15a and 15b to the terminals 18a and 18b, respectively. Further, the thin piece 15c is connected directly to the terminal 18c. Printed wiring is provided on the back surface of the printed circuit board 18 and has an electric circuit used to guide the terminals 18a, 18b, and 18c to a drive circuit board 20, described later.

A drive circuit board 20 is provided at the side of the unit substrate 11. A drive IC 21 is provided in the middle of the drive circuit board 20. The drive IC 21 determines those of the piezoelectric element pieces 15 which are to be driven, on the basis of data transmitted by a computer (not shown) and corresponding to graphical information. The drive IC 21 also supplies driving power (200 V) to these piezoelectric element pieces 15 via the printed wiring on the printed circuit board 18. An external connector 22 is provided at the top of the drive circuit board 20. Data transmitted by the computer (not shown) and corresponding to graphical information is inputted to the external connector 22. The external connector 22 outputs data and driving power to the drive IC 21.

Projections 23a and 23b are provided centrally at the respective ends of the front surface of the unit substrate 11. Hole portions 24a and 24b corresponding to the projections 23a and 23b, respectively, are formed centrally at the respective ends of the back surface of the unit substrate 11. When the adjacent unit substrates 11 are connected together, they are positioned by fitting the projections 23a and 23b on one of the unit substrates 11 into the hole portions 24a and 24b, respectively, in the other unit substrate 11.

Through-holes 25a to 25c are formed in the four corner portions of the unit substrate 11. When a plurality of unit substrates 11 are connected together, shaft rods (not shown) penetrate the through-holes 25a to 25c. Then, the unit substrates 11 are tightened and fixed to one another using a tightening member (not shown).

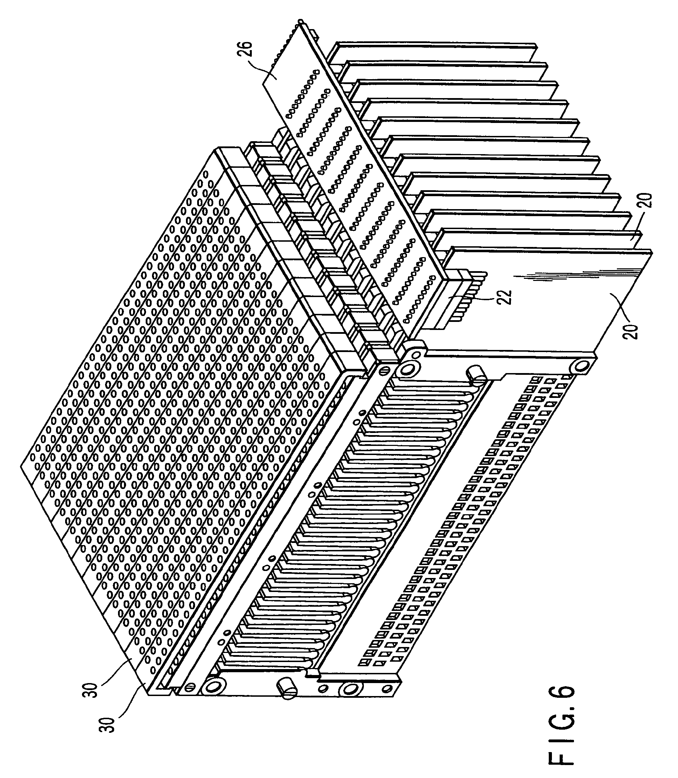

A plurality of thus configured braille graphics cell modules 30 are connected together in the horizontal direction as shown in FIG. 6 to constitute a braille graphics tactile apparatus which has a display screen of a predetermined size enough to display graphical information.

The unit substrates 11 are connected together while fitting the projections 23a and 23b on each unit substrate 11 into the hole portions 24a and 24b, respectively, in the adjacent unit substrate 11 for positioning. In this state, the shared shaft rods (not shown) are allowed to penetrate the through-holes 25a to 25c in the unit substrates 11. Further, the tightening member (not shown) is used to integrally tighten and fix the unit substrates 11.

Further, the drive circuit board 20, provided for each unit substrate 11, connects to a shared bus circuit board 26 via its external connector 22. The bus circuit board 26 is connected to the computer (not shown). The drive IC 21 of each unit substrate 11 is supplied with data transmitted by this computer and corresponding to graphical information as well as driving power for the piezoelectric element pieces 15.

In this configuration, the lower end of the unit substrate 11, constituting a unit, is provided with the printed circuit board 18, having the terminals 18a, 18b, and 18c, to which the piezoelectric element pieces 15a, 15b, and 15c, respectively, of the proximal ends 151 of the piezoelectric element pieces 15 are electrically connected, the printed circuit board 18 also having the electric circuit guiding the terminals 18a, 18b, and 18c to the drive circuit board 20. However, the upper edge of the printed circuit board 18 is located close to the node portion of each piezoelectric element piece 15 for a bending operation. Further, its lower edge is located close to the proximal end 151 of each piezoelectric element piece 15. Thus, compared to the conventional configuration in which the arithmetic driving section with the connector or the like is projected from the proximal end of the unit substrate, it is possible to eliminate the members projecting downward from the unit substrate 11. This sharply reduces the dimension in the height direction to enable a reduction in the size of the braille graphics cell module.

Further, the pushup cam 16 is provided between the free end 152 of each piezoelectric element piece 15 and the corresponding tactile pin 13. The pushup cam 16 has the first action piece 16a, which contacts against the free end 152 of the corresponding piezoelectric element piece 15, and the second action piece 16b, which has the placement surface 16b1 on which the lower end of the corresponding tactile pin 13 is placed. Furthermore, the pushup cam 16 is formed to have a large angle (obtuse angle) between the first action piece 16a and the placement surface 16b1 of the second action piece 16b. Thus, when the free end 152 of the bent piezoelectric element piece 15 pushes the first action piece 16a, the pushup cam 16 is pivoted to push up the tactile pin 13 placed on the second action piece 16b is pushed up. Specifically, the pushup cam 16 is formed to have such a large angle (obtuse angle) between the first action piece 16a and the second action piece 16b that the pushup cam 16 can be slightly bent. Thus, the tactile pin 13 is pushed up as a result of a small pivot angle associated with a bending operation of the corresponding piezoelectric element piece 15. This enables a reduction in the space required to pivot each pushup cam 16. Consequently, the spacing between the piezoelectric element pieces 15 and the tactile pins 13 can be reduced. It is thus possible to set a much smaller distance between the tactile pins 13. This enables a reduction in the display area required to communicate the same amount of graphical information. Therefore, the size of the braille graphics cell module can be reduced.

Furthermore, the pushup cam 16 helps to push up the corresponding tactile pin 13 when the corresponding piezoelectric element piece 15 is bent, even if the piezoelectric element piece 15 is extended in the vertical direction. Consequently, compared to the conventional configuration in which the piezoelectric element pieces are obliquely arranged, it is possible to eliminate the longitudinally projecting members. Thus, the dimension in the longitudinal direction can also be reduced. This also enables a reduction in the size of the braille graphics cell module.

Then, when a braille graphics tactile apparatus is configured by connecting a plurality of thus configured braille graphics cell modules together in the horizontal direction, it is possible to sharply reduce the height and longitudinal dimension of the whole apparatus. Consequently, the braille graphics tactile apparatus can be miniaturized. Further, a much smaller distance can be set between the tactile pins 13 of each braille graphics cell module. It is thus possible to reduce the area of the display screen required to communicate graphical information sufficient to be properly understood by users. This also enables a reduction in the size of the braille graphics tactile apparatus. Further, since the tactile pins 13 can be densely arranged, precise graphical information can be communicated.

According to the embodiment of the present invention, it is possible to provide a braille graphics cell module and a braille graphics tactile apparatus the sizes of which can be sharply reduced.

The inventions described below can be extracted from the above embodiments. The inventions described below may be individually applied or combined as required.

A braille graphics cell module according to the first aspect of the present invention is characterized by comprising: a unit substrate; a braille graphics display section which is extended along an upper edge of the unit substrate and holds a plurality of tactile pins movably in a vertical direction, the plurality of tactile pins displaying braille graphics; wiring part arranged at a lower end of the unit substrate so that an upper edge of the wiring part is located close to a node portion of each piezoelectric element piece for a bending operation and a lower edge of the wiring part is located close to the fixed end of the piezoelectric element piece, and having an electric circuit in which the fixed ends of the plurality of piezoelectric element pieces are electrically connected to the wiring part.

In the first aspect, the following modes are preferable.
(1) The unit substrate has at least one concave portion and at least one convex portion provided corresponding to the concave portion, the concave and convex portions being used to position a plurality of unit substrates when bases thereof are connected together.
(2) The unit substrate comprises a plurality of unit substrates, and the plurality of unit substrates are connected together to constitute a braille graphics apparatus.

A braille graphics cell module according to the second of the present invention is characterized by comprising: a unit substrate; a braille graphics display section which is extended along an upper edge of the unit substrate and holds a plurality of tactile pins movably in a vertical direction, the plurality of tactile pins displaying braille graphics; a plurality of piezoelectric element pieces each having a fixed end and a free end and arranged on a surface of the unit substrate in association with the plurality of tactile pins, the plurality of piezoelectric element pieces being bent; and pushup cams each provided pivotably between the corresponding piezoelectric element piece and tactile pin and each having a first action piece which contacts against the free end of the piezoelectric element and a second action piece having a placement surface on which a lower end of the tactile pin is placed, the pushup cams each being formed to have an obtuse angle between the first action piece and the second action piece, the pushup cams each being pivoted when the first action piece is pushed by the free end of the bent piezoelectric element piece, to push up the tactile pin placed on the second action piece.

In the second aspect, the following modes are preferable.
(1) A wiring part arranged at a lower end of the unit substrate is further provided so that an upper edge of the wiring part is located close to a node portion of each piezoelectric element piece for a bending operation and a lower edge of the wiring part is located close to the fixed end of the piezoelectric element piece, and having an electric circuit in which the fixed ends of the plurality of piezoelectric element pieces are electrically connected to the wiring part.
(2) The unit substrate has at least one concave portion and at least one convex portion provided corresponding to the concave portion, the concave and convex portions being used to position a plurality of unit substrates when bases thereof are connected together.
(3) The unit substrate comprises a plurality of unit substrates, and the plurality of unit substrates are connected together to constitute a braille graphics apparatus.

A braille graphics apparatus is characterized by comprising a plurality of braille graphics cell modules according to the first aspect or the second aspect, and a display screen of a predetermined size is formed to display graphical information.

According to an embodiment of the present invention, the wiring part has an electric circuit to which the proximal ends (fixed ends) of the piezoelectric elements are electrically connected. The wiring part is arranged at the lower end of the unit substrate so that its upper edge is located close to the node portion of each piezoelectric element piece for a bending operation, while its lower edge is located close to the proximal end of the piezoelectric element piece. This configuration eliminates the members projecting downward from the unit substrate. It is thus possible to sharply reduce the dimension of the braille graphics cell module in its height direction.

Further, according to an embodiment of the present invention, the pushup cam is provided between each piezoelectric element piece and the corresponding tactile pin so as to be pivotable. The pushup cam is formed to have such a large angle (obtuse angle) between the first action piece and the second action piece that the pushup cam can be slightly bent. Thus, the tactile pin is pushed up as a result of a small pivot angle associated with a bending operation of the corresponding piezoelectric element piece. This enables a reduction in the space required to pivot each pushup cam. Consequently, the spacing between the piezoelectric element pieces and the tactile pins can be reduced. It is thus possible to set a much smaller distance between the tactile pins.

Furthermore, according to an embodiment of the present invention, when a braille graphics tactile apparatus is configured by connecting a plurality of above braille graphics cell modules together in the horizontal direction, it is possible to sharply reduce the height and longitudinal dimension of the whole apparatus. Consequently, the braille graphics tactile apparatus can be further miniaturized.

The present invention is not limited to the above embodiments. The present invention may be implemented by making many variations to the above embodiments without departing from the spirits of the present invention. Furthermore, each of the above embodiments includes various levels of the invention. Accordingly, various inventions can be extracted by properly combining a plurality of constituent requirements disclosed.

Further, even if some of the constituent requirements shown in each embodiment are deleted, a configuration free from these constituent requirements can be extracted as an invention if it can solve the problems described above and can produce the effects described above.

## Claims

1. A braille graphics cell module **characterized by** comprising:
a unit substrate (11);
a braille graphics display section (12) which is extended along an upper edge of the unit substrate and holds a plurality of tactile pins movably in a vertical direction, the plurality of tactile pins displaying braille graphics;
a plurality of piezoelectric element pieces (15) each having a fixed end and a free end and arranged on a surface of the unit substrate in association with the plurality of tactile pins, the plurality of piezoelectric element pieces moving the corresponding tactile pins in the vertical direction at the free end by bending action; and
wiring means (18) arranged at a lower end of the unit substrate so that an upper edge of the wiring means is located close to a node portion of each piezoelectric element piece for a bending operation and a lower edge of the wiring means is located close to the fixed end of the piezoelectric element piece, and having an electric circuit in which the fixed ends of the plurality of piezoelectric element pieces are electrically connected to the wiring means.

2. A braille graphics cell module **characterized by** comprising:
a unit substrate (11);
a braille graphics display section (12) which is extended along an upper edge of the unit substrate and holds a plurality of tactile pins movably in a vertical direction, the plurality of tactile pins displaying braille graphics;
a plurality of piezoelectric element pieces (15) each having a fixed end and a free end and arranged on a surface of the unit substrate in association with the plurality of tactile pins, the plurality of piezoelectric element pieces being bent; and
pushup cams (16) each provided pivotably between the corresponding piezoelectric element piece and tactile pin and each having a first action piece which contacts against the free end of the piezoelectric element and a second action piece having a placement surface on which a lower end of the tactile pin is placed, the pushup cams each being formed to have an obtuse angle between the first action piece and the second action piece, the pushup cams each being pivoted when the first action piece is pushed by the free end of the bent piezoelectric element piece, to push up the tactile pin placed on the second action piece.

3. The braille graphics cell module according to claim 2, **characterized by** further comprising wiring means (18) arranged at a lower end of the unit substrate so that an upper edge of the wiring means is located close to a node portion of each piezoelectric element piece for a bending operation and a lower edge of the wiring means is located close to the fixed end of the piezoelectric element piece, and having an electric circuit in which the fixed ends of the plurality of piezoelectric element pieces are electrically connected to the wiring means.

4. The braille graphics cell module according to claim 1 or 2, **characterized in that** the unit substrate has at least one concave portion (121a) and at least one convex portion (121b) provided corresponding to the concave portion, the concave and convex portions being used to position a plurality of unit substrates when bases thereof are connected together.

5. The braille graphics cell module according to claim 1 or 2, **characterized in that** the unit substrate comprises a plurality of unit substrates, and the plurality of unit substrates are connected together to constitute a braille graphics apparatus.

6. A braille graphics apparatus **characterized by** comprising a plurality of braille graphics cell modules according to claim 1 or 2, **characterized in that** a display screen of a predetermined size is formed to display graphical information.
